# EUROPEAN PATENT SPECIFICATION

(11) **EP 1 739 995 B1**
(45) Date of publication and mention of the grant of the patent: **14.04.2010**
(21) Application number: 06116338.2
(22) Date of filing: 29.06.2006
(51) Int. Cl.: H04W 24/06

(54) **Centralised WLAN scanning system**
Zentralisiertes WLAN Abtastungssystem
Système de WLAN balayage centralisé

(30) Priority: 17.03.2006 US 377454; 30.06.2005 EP 05014203
(43) Date of publication of application: 03.01.2007
(73) Proprietor: Nokia Corporation, 02150 Espoo (FI)
(72) Inventor: Jaakkola, Mikko, 37560, Lempäälä (FI)
(74) Representative: TBK-Patent

(56) References cited:
- US-A- 5 940 760
- US-A1- 2004 120 278
- US-A1- 2005 037 755

## Description

### Field of the invention

The invention relates to a method and a device for wireless communication by which a scan for access networks can be performed.

### Description of the related art

This invention is related to a network in which a device for wireless communication may establish a connection to one or more access networks. Examples for such access networks are Wireless Local Area Networks (WLAN), wherein each network is identified by a Service Set IDentifier (SSID).

There are several reasons why a device might connect to a plurality of access networks. Namely, certain applications have needs for different kind of networks. For example, access networks may include a company network, hotspot provider (ISP (Internet Service Provider) & operator) networks and home WLAN networks. Different networks can provide different set of destination networks. Here a couple of examples:

From a company network, it is possible to reach intranet and Internet but it might not be possible to send mails via your person ISP account. From a WLAN home network, you might not be possible to use intranet services. Also, in technologies like UMA (Unlicensed Mobile Access) it might not be possible to carry data over UMA in all operators, so that also in this case it might be necessary to change an access network or to use additionally an alternative access network.

Furthermore, scanning for new access networks might be advantageous in order to get cheaper connection, better performing connection, or to find a current network for a particular service, as described above. Also technologies like location information using WLAN may use extensively scanning.

When connecting to WLAN networks, it is necessary to scan for surrounding WLAN networks to which a WLAN station (STA) may connect. The scanning procedure may be a passive scan, in which the WLAN station listens to beacons delivered from surrounding Access Points (AP), or an active scan, in which the WLAN station sends probe requests and waits for an answer.

Currently, most operating systems provide a basic WLAN API (Application Programming Interface) that allows applications do the scanning of the surrounding WLAN networks. Normally, the scanning is done so that an application triggers a scan request via the API to a corresponding subsystem, which then performs the scan operation. By having all the applications to perform separate scan logic, this can create a situation where the whole system is scanning just about all the times due to one-to-one mapping of all the scan requests.

For example, it is assumed that a WLAN station (e.g., a mobile device) has six applications that each have decided to scan the surrounding networks every two minutes. This situation can result in that the system initiates a scan every 20 seconds, which is very unnecessary in most cases. This has a very large effect on power-consumption. Namely, the situation that the device has to scan every 20 seconds will cause the average power-consumption to go up by 60 mW, which is almost ten times more than a normal basic phone idle power-consumption.

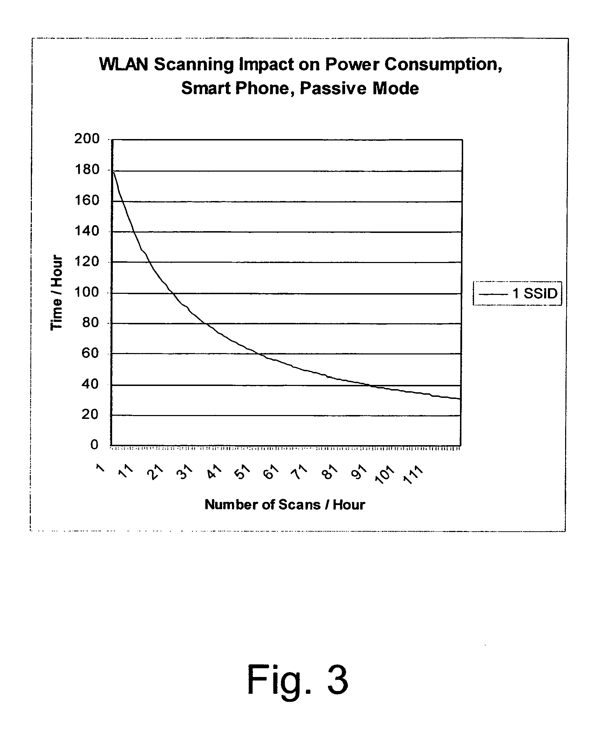

Fig. 3 illustrates about the effects of the scanning to stand-by time. In particular, Fig. 3 shows the WLAN scanning impact on power consumption, wherein a smart phone performing scanning in the passive mode is taken as an example. On the ordinate, the stand-by time is plotted in hours. On the abscissa, the number of scans per hour is plotted. Furthermore, in this example a scan for only one WLAN network, indicated by the SSID (Service Set IDentifier) is carried out.

As clearly derivable from Fig. 3, the stand-by time drastically reduces when the number of scans per hour is increased.

Hence, it is desirable to reduce the scanning operations.

Heretofore, some implementations prohibit a system to do scanning too often, and they are implementing this feature so that the system returns the old scan result if a certain threshold time has not been passed since the previous scan. For example, the Nokia Communicator 9500 does it this way. However, this makes application programming tricky as they do not know if the scan results are actually current or not. Also, this type of behaviour forces all the applications to have separate timers and they wake up separately the application engine processor thus increasing power-consumptions. Hence, this approach does not solve the problem sufficiently.

Furthermore, while a scan operation is performed, sending and receiving of data MPDUs (MAC (Medium Access Control) Protocol Data Unit) is not possible due to implementation limitation or it is very slow, so that the long time needed for the scan results affect applications, in particular applications that have real time requirements like voice. Thus, an increased number of scan operations may be annoying for the user of the WLAN station.

Document US 2004/120278 A1 discloses a method and system for scanning in wireless computing devices. The system has a scanning history table for storing scanning results and a scanning engine that adjusts the scanning period based upon a history of scanning results, wherein the scanning period is determined by evaluating previous scan results. In case the results have not changed, the scanning period is increased. If the results differ, the scan period is reset to a default period.

It is an object of the present invention to solve the problem mentioned above and to minimize the number of scans.

This object is solved by a scan control device as set out in the independent claim 1, and alternatively by a method as set out in the independent claim 11.

Hence, according to the invention, the scan operation is performed independently from the requests for providing scan information.

Therefore, a scan operation does not have to be performed each time such a request is received, but a scan operation can be carried out independently. In this way, only one scan operation is necessary during a particular time period, whereas according to the prior art for example scan operations in the number of the applications were necessary during the same time period.

Hence, the number of scans and, thus, the power-consumption can be considerably reduced.

Hence, according to the invention, an application transparent way of doing scanning is provided so that as many applications as possible could use the same scan results, so that not every application would be doing this scanning on their own.

Advantageous developments are set out in the dependent claims.

For example, the scan operation control means may send scan information which is obtained based on the scan operation. Moreover, the request for providing scan information may be stored in a memory, and the scan information may be sent by referring to the request stored in the memory. That is, a scan request does not have to be processed immediately but can be stored and is pending. When the result is to be sent to the application issued the request, the scan information is sent using information from this request.

Alternatively, the request may be a registration for a scan event. That is, an application can register to the scan event.

Furthermore, the request for providing scan information may contain a parameter indicating the maximum latency value.

Alternatively, the maximum latency value may be provided in a separate message.

The network detection may be performed with respect to at least one Wireless Local Area Network (WLAN). That is, the networks in question may be WLAN networks.

The device may be an Application Programming Interface (API).

Moreover, a plurality of application devices may be provided, and the scan control device may be configured to forward scan information to all application devices simultaneously.

The method according to the invention may be realized as a computer program product for a processing device, comprising software code portions for performing the steps of the method according to the invention when the program is run on the processing device. The computer program product may comprise a computer-readable (readable for the processing device) medium on which the software code portions are stored.

In this case, the request to provide scan information may be generated by at least one application module for executing an application.

Furthermore, in case a plurality of application modules are present, the scan control module may forward scan information to all application devices simultaneously. The scan control module may be implemented in an Application Programming Interface (API).

In particular, the processing device may be part of a WLAN apparatus (in more detail, a part of a WLAN host device), so that the computer program may be stored in a memory of the WLAN apparatus.

The invention is described by referring to the enclosed drawings, in which:
Fig. 1 shows a block diagram of a WLAN apparatus according to a preferred embodiment of the invention,
Fig. 2 shows timings of issuing scan request of several applications in order to illustrate the operation according to the preferred embodiment, and
Fig. 3 illustrates WLAN scanning impact on power consumption according to the prior art.

In the following, a preferred embodiment of the present invention is described by referring to the attached drawings.

In particular, according to the preferred embodiment, an API (as an example for a scan control device) is provided, which controls the scan operation such that the actual scan is performed independently from scan requests. That is, the actual scan is carried out at an own, independent timing.

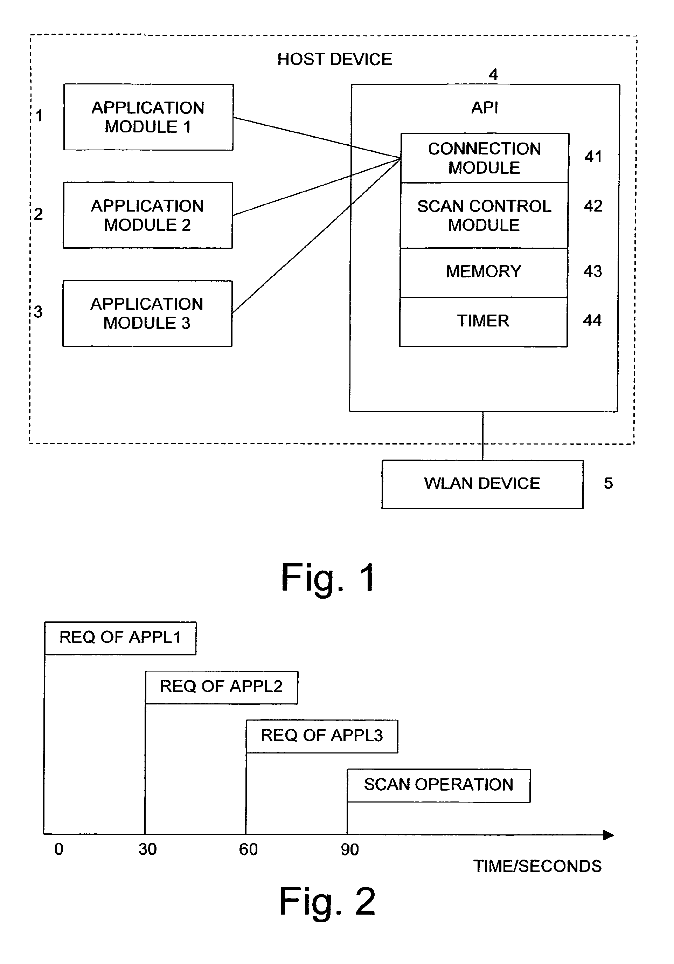

This is described in more detail by referring to Figs. 1 and 2.

Fig. 1 shows a block diagram of a WLAN station (as an example for an apparatus for wireless communication) according to the preferred embodiment, wherein three applications, i.e., application modules 1 to 3, an Application Programming Interface (API) 4 (as an example for a scan control device) and a WLAN device 5 are shown. The WLAN device 5 comprises a means for performing the actual scan, e.g., an antenna and a transceiver (not illustrated).

The WLAN station or WLAN apparatus comprise the WLAN device 5 and a host device, wherein in the host device the application modules 1 to 3 and the API are accommodated.

It is noted that the WLAN device can be a WLAN card to be inserted in a laptop computer, in a PDA (personal digital assistant), a mobile phone, a WLAN enabled device connected to the host by some other wireless technology e.g. bluetooth, a USB (Universal Serial Bus) stick inserted in a USB port of a laptop computer or a fixed personal computer or the like. In these cases, the laptop computer and the fixed personal computers are examples for host devices. Furthermore, the WLAN apparatus can be a laptop computer having an on-board WLAN functionality, a WLAN enabled phone or the like. In these cases, the WLAN device and the host device are arranged within one entity, and may only be logically separated.

In Fig. 1, three main parts of the API 4 are illustrated: a connection module 41 (as an example for a request receiving means) establishes a connection to the application modules 1 to 3 in order to receive scan requests and to send scan results, a scan control module 42 for performing the actual control of the scan operation, a memory 43 for storing scan requests or scan registrations, and also for storing programs, data etc, and a timer 44 for setting scan intervals.

According to the preferred embodiment, the connection module 41 receives a scan request from at least one of the application modules. This request is forwarded to the scan control module 42 which controls the scan operation independently from the reception of the scan request.

That is, according to the present embodiment, the SW (Software) subsystem of the WLAN station provides an API that allows various applications to register for a delayed scan event when ever the system scans. When system would do the scanning, all the applications would be let to know about the scan results as a scan event, instead of having then to poll the system themselves.

Hence, according to the present embodiment a centralized way of controlling when the actual WLAN scan happens is provided by separating the interface and implementation from the applications.

It is noted that the scan request can be a direct scan request, which is basically the same as the scan known in the prior art, or alternatively a registration for a scan event. The registration for a scan event means that the application informs the API that it would like to have scan results when the WLAN device actually performs a scan operation.

In the following, the operation according to the preferred embodiment is described by referring to Fig. 2. In Fig. 2, the timings of scan requests of the applications and the actual start of the scan operation are illustrated.

In this example, it is assumed that the application 1, which wants to initiate a WLAN connection when it sees a network 'a', decides to register itself for scan events. Application 1 decides then to also set that it would like the system to scan after every 2 minutes. This registration or request is issued at the beginning of the illustrated sequence, i.e., at 0 seconds.

Then, the application 2 is started 30 seconds later and it also wants to initiate a WLAN connection when it sees a network 'b'. Thus, it decides to register itself for scan events. It also sets its scan period to be 2 minutes.

Then, application 3 is started further 30 seconds later and it also wants to initiate a WLAN connection when it sees a network 'b' decides to register itself for scan events. It sets its scan period to be 3 minutes. This registration or request is issued at 60 seconds.

After 30 seconds the system (i.e., the WLAN device under control of the API 4, and in more detail, of the scan control module 42) scans and the scan results are delivered to all the applications simultaneously. As the maximum interval for the scan is two minutes (the interval of 3 minutes requested by the application 3 would be to long for the applications 1 and 2), the system waits for another two minutes after providing another scan results. That is, the scan control module 42 sets the timer 44 to two minutes, so that a scan operation is performed every 2 minutes.

In contrast thereto, according to the prior art, the scan operation would have been carried out immediately upon issuing the corresponding scan requests and then at each individual interval. That is, in average every 40 seconds the scan operation would have been carried out.

It is noted that the actual scan operation can be started at an arbitrary timing independent from the timings of issuing the scan requests. For example, a first scan operation can already be carried out immediately (e.g., 5 seconds) after receiving the first scan request from application 1. The applications 2 and 3, which issued their scan requests or registered to the scan event later, will be provided with the scan results upon the next scan operation, i.e., at 2 minutes and 5 seconds after the start.

Thus, according to the preferred embodiment the amount of power needed by the WLAN chipset (WLAN device) as well as the host processors (including API and applications) is reduced.

Hence, in order to implement this type of service, the API is adapted to allow applications to register for scan events or issue a scan request that will be pending on the WLAN subsystem until the subsystem actually performs scan, and then the call is returned, i.e., the scan results are delivered to the applications. Furthermore, the API allows some way of setting the maximum scan latency by the applications. This can be done either during the pending scan requests as a parameter or by setting a separate application specific MIB (Management Information Base).

The parameter during the scan request is referred to as a maximum pending timeout parameter with a pending scan request (asynchronous scan request). Many operating systems provide an asynchronous service that allows client send a message to service and still carry on executing its code path until it receives an indication about the completion of the request.

In the following, an implementation example for such a type of request from client side for this type is described, wherein a start with forced scan and then a move into a periodic mode is illustrated. It is noted that the following examples are written in a pseudo code based on the computer language C.

```
 AsyncHandle handle;
 MaximumScanLatency latency = 0;

 ScanNetwork (latency, &handle, &ScanBuffer);

 ... execute other operations

 ScanCompleteIndication(void* ScanBuffer){
     // Apparently the scan has completed
     ProcessScanRequest(ScanBuffer);
     // Let's resubmit the scan request to make scanning
 periodic
     latency = TrueMaximumValue;

     ScanNetwork(latency, &handle,&ScanBuffer);
 }
```

From service side this might look like:

```
 ScanNetworkRequest(MaximumScanLatency, AsyncHandle*
 hHandle, void* ScanBuffer){
     CurrentBuffer = ScanBuffer;
     RequestHandle = hHandle;
     ....
     ....
 }

 TimerComplete(){
     PerformScan(...);
 }

 ScanComplete(ScanResults* pResult){
     CopyResults(CurrentBuffer, ScanResult);
     CompleteAsyncRequest(hHandle); // Completes the OS
 request and indicated that to client

     ResetTime(Minimum(MaxScanLatencyList));
 }
```

Hence, according to the present embodiment, it is possible to provide parameters with an asynchronous request, which is also referred to as a pending request.

It is noted that it is basically possible to force the subsystem to do the scanning right away by specifying the MaximumScanLatency to zero. However, this is only sensible for initial scan requests (or an "emergency scan request" after losing connection or the like), since this would imply that also during normal operation (i.e., after the starting procedure), scanning has to be performed all the time.

In the above example, this maximum scan latency is 2 minutes for applications 1 and 2, and 3 minutes for application 3. That is, the scan interval is set according to the minimum of maximum scan latencies of the applications, which is 2 minutes in the above example.

The system may perform a basic scanning right away when the first request is being issued, but after that all the framework initiated scans are synchronized together so that the maximum latency would always be respected.

Furthermore, if some other system events trigger scan (immediate scan request call etc.), then the framework will make use of the new scan requests by providing the scan information for application as well and basically resetting the timer again.

That is, in case an immediate scan operation is required, the scan control module 42 immediately performs the scan operation and resets the timer 44, so that the next scan operation is performed after the interval previously set with the timer 44.

Moreover, in case a new request is issued or another application registers to the scan event, the interval can be adapted. That is, in case an application 4 in the above example needs to have a scan operation every 1 minute, than the interval is to 1 minute, so that also the value of the timer 44 would be rewritten to 1 minute. A similar operation is carried out when an earlier request or registration is modified, namely when, for example, it is for some reason necessary for application 1 to have a scan operation every 1 minute.

To applications, the type of scanning according to the present embodiment would look like a delayed scan request but most of the applications would not care about this as usually scanning is anyway a periodic operation.

That is, in a practical implementation, it is not necessarily required to adapt the applications to the scan procedure according to the present embodiment. They can simply issue scan requests as in the prior art, but will receive the results delayed.

That is, the scan requests may be simply stored in the memory 43, and when the scan result is sent to the application modules 1 to 3, the scan control module 42 refers to the stored scan request in order to address the corresponding application module, for example.

However, as already mentioned above, alternatively the application can register to the scan event.

Hence, according to the present embodiment, the power-consumption due to scanning operations can be significantly reduced. That is, the stand-by time of a WLAN station (such as a mobile phone, a laptop computer or the like with WLAN functionality) can be considerably prolonged.

Moreover, also the traffic due to scanning is reduced so that radio resources may be saved.

The more applications there are, the more benefits from power-consumption point of view can be achieved. Having system initiated scanning can also help applications to react for certain events. For example, when connection gets bad, the system will start performing an automatic scan operation immediately in order to roam. Then, all the scan results are being delivered to the applications, which gives them more time to adapt to the low signal conditions.

Namely, if, by using the conventional technique, all applications would start doing separate scanning, and one scan would take 0.5 seconds, then, in a case of five applications, the last application would get its result after 2.5 seconds. In contrast thereto, all applications receive the scan results after the first scan, i.e., after 0.5 seconds.

Hence, according to the present embodiment, an application transparent way of doing scanning is provided so that as many applications as possible could use the same scan results, so that no every application would be doing this scanning on their own.

Further possibility to benefit from this invention in WLAN station power consumption sense is that the WLAN station can be set to operate in a low power mode. In such case there would be a limit for the scanning frequency. Such a limit could be e.g. one scan per 30s. Since scanning would not be made more often, the applications registered for scan events might have to settle for the same scan result several times. Nevertheless, there would be the advantage of performing scans for all the registered applications instead performing scans for all the applications separately and simultaneously save power.

The invention is not limited to the embodiment described above, and various modifications are possible.

For example, the invention is not limited to WLAN, but can also be applied to other radio networks in which it is necessary to perform a scan operation in order to detect access networks.

The invention can also be realized by a computer program product. The computer program product, i.e., the computer code may be stored on a medium, e.g., a memory card, a RAM (Random access memory) or a ROM (read only memory), a hard drive, a CD-ROM or a DVD-ROM.

In this case, the different applications described above are application program modules, and the API is realized as an API program module.

## Claims

1. A device, configured to perform a network detection in a scan operation, the device comprising
a request receiving means for receiving at least one request for providing scan information, and
a scan operation control means for performing a scan operation independently from receiving the at least one request for providing scan information,
wherein the scan operation control means is configured to receive a maximum latency value indicating a maximum delay time by which the scan operation may be delayed and to set an interval for performing the scan operation based on the maximum latency value, and **characterized by**
wherein there are a plurality of requests for providing scan information and a plurality of maximum latency values from application modules connected to the scan control device, and the scan operation control means is configured to set an interval based on a minimum value of the maximum latency values.

2. The device according to claim 1, further comprising a sending means, wherein the scan operation control means is configured to send scan information which is obtained based on the scan operation.

3. The device according to claim 2, further comprising a memory, wherein the scan operation control means is configured to store the request for providing the scan information, and the sending means is configured to send the scan information by referring to the request stored in the memory.

4. The device according to claim 1, wherein the request is a registration for a scan event, by which an application module informs the scan control device that it would like to have scan results when a scan is performed.

5. The device according to claim 1, wherein the scan request contains a parameter indicating the maximum latency value for executing the scan operation, and the scan operation control means is configured to extract the maximum latency value from the request for providing scan information.

6. The device according to claim 1, wherein the scan operation control means is configured to receive the maximum latency value in a separate message.

7. The device according to claim 1, wherein the network detection is performed with respect to at least one wireless local area network.

8. The device according to claim 1, wherein the device is an application programming interface.

9. An apparatus for wireless communication, comprising
a device according to one of the claims 1 to 8, and
at least one application device for executing an application,
wherein the application device is configured to request scan information from the scan operation control device.

10. The apparatus according to claim 9, wherein a plurality of application devices is provided and the scan control device is configured to forward scan information to all application devices simultaneously.

11. A method for controlling a scan operation, wherein in the scan operation a network detection is performed, the method comprising
receiving at least one request for providing scan information, and
controlling performing of a scan operation independently from receiving the at least one request for providing scan information,
receiving a maximum latency value indicating a maximum delay time by which the scan operation may be delayed, and
setting an interval for performing the scan operation based on the maximum latency value, **characterized by**
wherein there are a plurality of requests for providing scan information and a plurality of maximum latency values from application modules, and the method comprises setting an interval based on a minimum value of the maximum latency values.

12. The method according to claim 11, further comprising
sending scan information which is obtained based on the scan operation.

13. The method according to claim 12, further comprising
storing the request for providing the scan information in a memory, wherein in the sending step, the scan information is sent by referring to the request stored in the memory.

14. The method according to claim 11, wherein the request is a registration for a scan event, by which an application module informs the scan control device that it would like to have scan results when a scan is performed.

15. The method according to claim 11, wherein the request for providing scan information comprises a parameter indicating the maximum latency value for executing a scan operation, and the method further comprising the step of extracting the maximum latency value from the request for providing the scan information.

16. The method according to claim 11, further comprising receiving the maximum latency value in a separate message.

17. The method according to claim 11, wherein the network detection is performed with respect to at least one wireless local area network.

18. The method according to claim 11, wherein the method is carried out by an application programming interface (API).

19. The method according to one of the claims 11 to 18, wherein in the request receiving step,
the request to provide scan information is sent by at least one application device.

20. The method according to claim 11, wherein a plurality of application devices is provided and
in the sending step, scan information is forwarded to all application devices simultaneously.

21. A computer program product for a processing device, comprising software code portions for performing the steps of any one of claims 11 to 18 when the program is run on the processing device,
wherein the request receiving step and the controlling step are carried out in a scan control module.

22. The computer program product according to claim 21, wherein the request to provide scan information is generated by at least one application module for executing an application.

23. The computer program product according to claim 22, wherein a plurality of application modules are present, and the scan control module is adapted to forward scan information to all application devices simultaneously.

24. The computer program product according to claim 21, wherein the scan control module is implemented in an application programming interface.

25. The computer program product according to one of the claims 21 to 24, wherein the computer program product comprises a computer-readable medium on which the software code portions are stored.

26. The computer program product according to claim 21, wherein the processing means is part of a wireless local area network apparatus.

## Patentansprüche

1. Vorrichtung, die eingerichtet ist, um in einer Abtastoperation eine Netzwerkerfassung durchzuführen, wobei die Vorrichtung aufweist
eine Anfrageempfangseinrichtung zum Empfang von zumindest einer Anfrage, um Abtastinformationen zur Verfügung zu stellen, und
eine Abtastoperationssteuerungseinrichtung zur Durchführung einer Abtastoperation, unabhängig vom Empfang der zumindest einen Anfrage, um Abtastinformationen zur Verfügung zu stellen,
wobei die Abtastoperationssteuerungseinrichtung eingerichtet ist, um einen maximalen Latenzwert zu empfangen, der eine maximale Verzögerungszeit anzeigt, um die die Abtastoperation verzögert werden kann, und um ein Intervall zur Durchführung der Abtastoperation auf der Grundlage des maximalen Latenzwerts einzustellen, und
die **dadurch gekennzeichnet ist, dass**
es eine Vielzahl von Anfragen, um Abtastinformationen zur Verfügung zu stellen, und eine Vielzahl von maximalen Latenzwerten von Anwendungsmodulen, die mit der Abtaststeuerungsvorrichtung verbunden sind, gibt, und die Abtastoperationssteuerungseinrichtung eingerichtet ist, um ein Intervall auf der Grundlage eines Minimalwerts der maximalen Latentwerte einzustellen.

2. Vorrichtung gemäß Anspruch 1, ferner mit einer Sendeeinrichtung, wobei die Abtastoperationssteuerungseinrichtung eingerichtet ist, um Abtastinformationen zu senden, die auf der Grundlage der Abtastoperation erlangt sind.

3. Vorrichtung gemäß Anspruch 2, ferner mit einem Speicher, wobei die Abtastoperationssteuerungseinrichtung eingerichtet ist, um die Anfrage, um Abtastinformationen zur Verfügung zu stellen, zu speichern, und die Sendeeinrichtung eingerichtet ist, um die Abtastinformationen durch Bezugnahme auf die in dem Speicher gespeicherte Anfrage zu senden.

4. Vorrichtung gemäß Anspruch 1, wobei die Anfrage eine Registrierung eines Abtastereignisses ist, durch das ein Anwendungsmodul die Abtaststeuerungsvorrichtung darüber informiert, dass es gerne Abtastergebnisse erhalten würde, wenn ein Abtasten durchgeführt wird.

5. Vorrichtung gemäß Anspruch 1, wobei die Abtastanfrage einen Parameter enthält, der den maximalen Latenzwert zur Ausführung der Abtastoperation anzeigt, und wobei die Abtastoperationssteuerungseinrichtung eingerichtet ist, um den maximalen Latenzwert aus der Anfrage, um Abtastinformationen zur Verfügung zu stellen, zu extrahieren.

6. Vorrichtung gemäß Anspruch 1, wobei die Abtastoperationssteuerungseinrichtung eingerichtet ist, um den maximalen Latenzwert in einer gesonderten Nachricht zu empfangen.

7. Vorrichtung gemäß Anspruch 1, wobei die Netzwerkerfassung hinsichtlich zumindest eines drahtlosen lokalen Netzwerks durchgeführt wird.

8. Vorrichtung gemäß Anspruch 1, wobei die Vorrichtung eine Schnittstelle zur Anwendungsprogrammierung (API) ist.

9. System zur drahtlosen Kommunikation, mit
einer Vorrichtung gemäß einem der Ansprüche 1 bis 8, und
zumindest einer Anwendungsvorrichtung zur Ausführung einer Anwendung,
wobei die Anwendungsvorrichtung eingerichtet ist, um Abtastinformationen von der Abtastoperationssteuerungsvorrichtung anzufragen.

10. System gemäß Anspruch 9, wobei eine Vielzahl von Anwendungsvorrichtungen zur Verfügung gestellt ist, und die Abtaststeuerungsvorrichtung eingerichtet ist, um Abtastinformationen gleichzeitig an alle Anwendungsvorrichtungen weiterleiten.

11. Verfahren zum Steuern einer Abtastoperation, wobei in der Abtastoperation eine Netzwerkerfassung durchgeführt wird, wobei das Verfahren aufweist
Empfangen zumindest einer Anfrage, um Abtastinformationen zur Verfügung zu stellen, und
Steuern des Durchführens einer Abtastoperation, unabhängig vom Empfangen der zumindest einen Anfrage, um Abtastinformationen zur Verfügung zu stellen,
Empfangen eines maximalen Latenzwerts, der eine maximale Verzögerungszeit anzeigt, um die die Abtastoperation verzögert werden kann, und
Einstellen eines Intervalls zum Durchführen der Abtastoperation auf der Grundlage des maximalen Latenzwerts,
und das **dadurch gekennzeichnet ist, dass**
es eine Vielzahl von Anfragen, um Abtastinformationen zur Verfügung zu stellen, und eine Vielzahl von maximalen Latenzwerten von Anwendungsmodulen gibt, und das Verfahren ein Einstellen eines Intervalls auf der Grundlage eines Minimalwerts der maximalen Latenzwerte aufweist.

12. Verfahren gemäß Anspruch 11, ferner mit
Senden von Abtastinformationen, die auf der Grundlage der Abtastoperation erlangt werden.

13. Verfahren gemäß Anspruch 12, ferner mit
Speichern der Anfrage, um Abtastinformationen zur Verfügung zu stellen, in einem Speicher, wobei in dem Sendeschritt die Abtastinformationen durch Bezugnahme auf die in dem Speicher gespeicherte Anfrage gesendet werden.

14. Verfahren gemäß Anspruch 11, wobei die Anfrage eine Registrierung eines Abtastereignisses ist, durch das ein Anwendungsmodul die Abtaststeuerungsvorrichtung darüber informiert, dass es gerne Abtastergebnisse erhalten würde, wenn ein Abtasten durchgeführt wird.

15. Verfahren gemäß Anspruch 11, wobei die Anfrage, um Abtastinformationen zur Verfügung zu stellen, einen Parameter aufweist, der den maximalen Latenzwert zum Ausführen einer Abtastoperation anzeigt, und wobei das Verfahren ferner den Schritt des Extrahierens des maximalen Latenzwerts aus der Anfrage, um Abtastinformationen zur Verfügung zu stellen, aufweist.

16. Verfahren gemäß Anspruch 11, ferner mit Empfangen des maximalen Latenzwerts in einer gesonderten Nachricht.

17. Verfahren gemäß Anspruch 11, wobei das Netzwerkerfassen hinsichtlich zumindest eines drahtlosen lokalen Netzwerks durchgeführt wird.

18. Verfahren gemäß Anspruch 11, wobei das Verfahren durch eine Schnittstelle zur Anwendungsprogrammierung (API) durchgeführt wird.

19. Verfahren gemäß einem der Ansprüche 11 bis 18, wobei in dem Anfrageempfangsschritt,
die Anfrage, um Abtastinformationen zur Verfügung zu stellen, von zumindest einer Anwendungsvorrichtung gesendet wird.

20. Verfahren gemäß Anspruch 11, wobei eine Vielzahl von Anwendungsvorrichtungen zur Verfügung gestellt wird, und
in dem Sendeschritt Abtastinformationen an alle Anwendungsvorrichtungen gleichzeitig weitergeleitet werden.

21. Ein Computerprogrammprodukt für eine Verarbeitungsvorrichtung, mit Softwarecodeanteilen zum Durchführen der Schritte eines der Ansprüche 11 bis 18, wenn das Programm auf der Verarbeitungsvorrichtung ausgeführt wird,
wobei der Anfrageempfangsschritt und der Steuerungsschritt in einem Abtaststeuerungsmodul ausgeführt werden.

22. Computerprogrammprodukt gemäß Anspruch 21, wobei die Anfrage, um Abtastinformationen zur Verfügung zu stellen, von zumindest einem Anwendungsmodul zum Ausführen einer Anwendung erzeugt wird.

23. Computerprogrammprodukt gemäß Anspruch 22, wobei eine Vielzahl von Anwendungsmodulen vorhanden ist, und das Abtaststeuerungsmodul angepasst ist, um Abtastinformationen an alle Anwendungsvorrichtungen gleichzeitig weiterzuleiten.

24. Computerprogrammprodukt gemäß Anspruch 21, wobei das Abtaststeuerungsmodul in einer Schnittstelle zur Anwendungsprogrammierung (API) implementiert ist.

25. Computerprogrammprodukt gemäß einem der Ansprüche 21 bis 24, wobei das Computerprogrammprodukt ein computerlesbares Medium aufweist, auf dem die Softwarecodeanteile gespeichert sind.

26. Computerprogrammprodukt gemäß Anspruch 21, wobei die Verarbeitungseinrichtung ein Teil eines drahtlosen lokalen Netzwerksystems ist.

## Revendications

1. Dispositif, configuré pour effectuer une détection de réseau dans une opération de balayage, le dispositif comprenant :
un moyen de réception de demande pour recevoir au moins une demande pour fournir des information de balayage, et
un moyen de commande d'opération de balayage pour effectuer une opération de balayage indépendamment de la réception d'au moins une demande pour fournir des informations de balayage,
dans lequel le moyen de commande d'opération de balayage est configuré pour recevoir une valeur de temps d'attente maximum indiquant un temps de retard maximum par lequel l'opération de balayage peut être retardée et pour faire une pause pour effectuer l'opération de balayage sur la base de la valeur de temps d'attente maximum, et **caractérisé en ce qu'**il y a une pluralité de demandes pour fournir des informations de balayage et une pluralité de valeurs de temps d'attente maximum provenant des modules d'application connectés au dispositif de commande de balayage, et **en ce que** le moyen de commande d'opération de balayage est configuré pour faire une pause sur la base d'une valeur minimum des valeurs de temps d'attente maximum.

2. Dispositif selon la revendication 1, comprenant en outre un moyen d'envoi, dans lequel le moyen de commande d'opération de balayage est configuré pour envoyer des informations de balayage qui sont obtenues sur la base de l'opération de balayage.

3. Dispositif selon la revendication 2, comprenant en outre une mémoire, dans lequel le moyen de commande d'opération de balayage est configuré pour stocker la demande pour fournir les information de balayage, et le moyen d'envoi est configuré pour envoyer les informations de balayage en se référant à la demande stockée dans la mémoire.

4. Dispositif selon la revendication 1, dans lequel la demande est un enregistrement pour un événement de balayage, par laquelle un module d'application informe le dispositif de command de balayage qu'il souhaiterait avoir des résultats de balayages lorsqu'un balayage est effectué.

5. Dispositif selon la revendication 1, dans lequel la demande de balayage contient un paramètre indiquant la valeur de temps d'attente maximum pour exécuter l'opération de balayage, et le moyen de commande d'opération de balayage est configuré pour extraire la valeur de temps d'attente maximum à partir de la requête pour fournir des informations de balayage.

6. Dispositif selon la revendication 1, dans lequel le moyen de commande d'opération de balayage est configuré pour recevoir la valeur de temps d'attente maximum dans un message séparé.

7. Dispositif selon la revendication 1, dans lequel la détection de réseau est effectuée par rapport à au moins un réseau local sans fil.

8. Dispositif selon la revendication 1, dans lequel le dispositif est une interface de programmation d'application.

9. Appareil pour communication sans fil, comprenant
un dispositif selon l'une des revendications 1 à 8, et
au moins un dispositif d'application pou exécuter une application,
dans lequel le dispositif d'application est configuré pour demander des informations de balayage provenant du dispositif de commande d'opération de balayage.

10. Appareil selon la revendication 9, dans lequel une pluralité de dispositifs d'application est prévue et le dispositif de commande de balayage est configuré pour expédier les informations de balayage simultanément à tous les dispositifs d'application.

11. Procédé pour commander une opération de balayage, dans lequel, dans l'opération de balayage, une détection de réseau est effectuée, le procédé comprenant les étapes consistant à :
recevoir au moins une demande pour fournir des information de balayage, et
commander le déroulement de l'opération de balayage indépendamment de la réception de l'au moins une demande pour fournir des informations de balayage,
recevoir une valeur de temps d'attente maximum indiquant un temps de retard maximum par lequel l'opération de balayage peut être retardée, et
faire une pause pour effectuer l'opération de balayage sur la base de la valeur de temps d'attente maximum, **caractérisé en ce qu'**il y a une pluralité de demandes pour fournir des informations de balayage et une pluralité de valeurs de temps d'attente maximum provenant des modules d'application, et **en ce que** le procédé comprend l'étape consistant à faire une pause sur la base d'une valeur minimum des valeurs de temps d'attente maximum.

12. Procédé selon la revendication 11, comprenant en outre l'étape consistant à :
envoyer des informations de balayage qui sont obtenues sur la base de l'opération de balayage.

13. Procédé selon la revendication 12, comprenant en outre l'étape consistant à :
stocker la demande pour fournir les informations de balayage dans une mémoire, dans lequel, dans l'étape de d'envoi, les informations de balayages sont envoyées en référence à la demande stockée dans la mémoire.

14. Procédé selon la revendication 11, dans lequel la demande est une inscription pour un événement de balayage, par laquelle un module d'application informe le dispositif de commande de balayage qu'il souhaiterait avoir des résultats de balayage lorsqu'un balayage est effectué.

15. Procédé selon la revendication 11, dans lequel la demande pour fournir des informations de balayage comprend un paramètre indiquant la valeur de temps d'attente maximum pour exécuter une opération de balayage, et le procédé comprend en outre l'étape consistant à extraire la valeur de temps d'attente maximum à partir de la demande pour fournir les informations de balayage.

16. Procédé selon la revendication 11, comprenant en outre l'étape consistant à recevoir la valeur de temps d'attente maximum dans un message séparé.

17. Procédé selon la revendication 11, dans lequel la détection de réseau est effectuée par rapport à au moins un réseau local sans fil.

18. Procédé selon la revendication 11, dans lequel le procédé est mis en oeuvre par une interface de programmation d'application (API).

19. Procédé selon l'une des revendications 11 à 18, dans lequel dans l'étape de réception de demande,
la demande visant à fournir des informations de balayage est envoyée par au moins un dispositif d'application.

20. Procédé selon la revendication 11, dans lequel une pluralité de dispositifs d'application est prévue et
dans l'étape d'envoi, des informations de balayage sont expédiées simultanément à tous les dispositifs d'application.

21. Produit programme informatique pour un dispositif de traitement comprenant des parties de code de logiciel pour effectuer les étapes selon l'une des revendications 11 à 18 lorsque le programme est exécuté sur le dispositif de traitement,
dans lequel l'étape de réception de demande et l'étape de commande sont mises en oeuvre dans un module de commande de balayage.

22. Produit programme informatique selon la revendication 21, dans lequel la demande visant à fournir des information de balayage est générée par au moins un module d'application pour exécuter une application.

23. Produit programme informatique selon la revendication 22, dans lequel une pluralité de modules d'application est présente, et le module de commande de balayage est adapté pour expédier des informations de balayage simultanément à tous les dispositifs d'application.

24. Produit programme informatique selon la revendication 21, dans lequel le module de commande de balayage est mis en oeuvre dans une interface de programmation d'application.

25. Produit programme informatique selon l'une des revendications 21 à 24, dans lequel le produit programme informatique comprend un support lisible par ordinateur sur lequel les parties de code de logiciel sont stockées.

26. Produit programme informatique selon la revendication 21, dans lequel le moyen de traitement est une partie d'un appareil de réseau local sans fil.
